# EUROPEAN PATENT APPLICATION

(11) **EP 1 933 241 A2**
(43) Date of publication of application: **18.06.2008**
(21) Application number: 07121754.1
(22) Date of filing: 28.11.2007
(51) Int. Cl.: G06F 17/30

(54) **Information processing method, information processing device and program**

(30) Priority: 12.12.2006 JP 2006334899
(71) Applicant: Sony Corporation, Minato-ku Tokyo 108-0075 (JP)
(72) Inventor: Mitsuru, Takehara, Tokyo (JP); Yoichiro, Sako, Tokyo (JP); Itaru, Kawakami, Tokyo (JP); Takatoshi, Nakamura, Tokyo (JP); Yuichi, Abe, Tokyo (JP)
(74) Representative: Körber, Martin Hans

(57) **Abstract**

An information processing method comprises a storage step in which attribute information indicating an attribute of specific contents carried in content information is stored in correlation to the content information, a generation step in which an attribute information aggregation is generated by extracting at least part of attribute information stored through the storage step, a first decision-making step in which a decision is made as to whether or not a set of content information stored in a storage medium contains any of attribute information constituting the attribute information aggregation and a correlating step in which the set of content information and specific attribute information, judged to be contained in the set of content information among the attribute information constituting the attribute information aggregation, are set in correlation to each other.

## Description

### Cross Reference to Related Application

Present invention contains subject matter related to Japanese Patent Application JP 2006-334899 filed in the Japan Patent Office on December 12, 2006, the entire contents of which are incorporated herein by reference.

### Background of the Invention

### Field of the Invention

The present invention relates to an information processing method, an information processing device and a program.

### Description of the Related Art

Services for providing content information requested by users are widely available via information servers where content information carrying specific contents such as news reports, movies and music is offered. Attribute information briefly describing the specific contents of the individual sets of content information and appended as tags to the content information stored in an information server will allow a user to efficiently search for and request the content information he wants based upon the tags. For this reason, accurate tags need to be appended to the content information stored in the information server.

Such tags may be appended to the content information either manually or automatically. In the manual method, a viewer views/listens to content information and appends a tag, judged by the viewer to be appropriate for the particular contents, to the content information. While the manual method is advantageous in that an accurate tag is appended to the content information, it is laborious to view/listen to all the content information stored in the information server and summarize the contents.

Japanese Laid Open Patent Publication No. 2003-228569 discloses a meta-data attaching method for automatically appending meta-data to content information. In this meta-data attaching method, a keyword is extracted from content information provided in a text format, the keyword is compared with comparison tag groups each set in advance in correspondence to a set of meta-data and meta-data judged to match the contents of the content information based upon the comparison results are appended to the content information.

### Summary of the Invention

The comparison tag groups used in the meta-data attaching method in the related art described above are set manually or are set by morphologically analyzing the contents of content information. While the process of manually setting the comparison tag groups is bound to be extremely laborious, a comparison tag group set by morphologically analyzing the contents of content information may include an unsuitable comparison tag.

Accordingly, the present invention, having been completed by addressing the issues discussed above, provides a new and improved information processing method, a new and improved information processing device and a new and improved program with which an attribute information aggregation containing optimal attribute information generated through a simple process, can be used to correlate content information to attribute information.

According to an embodiment of the present invention, there is provided an information processing method comprising a storage step in which attribute information indicating an attribute of specific contents carried in content information is stored in correlation to the content information, a generation step in which an attribute information aggregation is generated by extracting at least part of attribute information stored through the storage step, a first decision-making step in which a decision is made as to whether or not a set of content information stored in a storage medium contains any of attribute information constituting the attribute information aggregation and a correlating step in which the set of content information and specific attribute information judged to be contained in the set of content information among the attribute information constituting the attribute information aggregation are set in correlation to each other.

Through the generation step, an attribute information aggregation can be generated automatically by extracting attribute information stored in the storage step in correspondence to content information. Since the attribute information constituting this attribute information aggregation is attribute information having been added to the content information through, for instance, a manual process, attribute information that does not correctly indicate a content information attribute is less likely to be included in the attribute information aggregation. In the correlating step, a set of content information and specific attribute information judged to be contained in the set of content information among the attribute information constituting the attribute information aggregation are set in correlation to each other. Thus, attribute information can be set in correspondence to content information through a simple process by adopting the information processing method.

The content information may include time point information indicating the time point at which the specific contents originated. In this case, information processing can be executed by using the time point information contained in the content information.

The information processing method may further comprise a second decision-making step in which a decision is made as to whether or not to designate the set of content information as a correlation target to be correlated to the specific attribute information based upon a timing relationship between the time point indicated in the first time point information contained in the set of content information and the time point indicated in second time point information contained in specific content information to which the specific attribute information has been manually correlated. Since a decision as to whether or not a set of content information should be designated as a correlation target to be correlated to the specific attribute information is made by taking into consideration the relationship between the time point indicated in the first time point information and the time point indicated in the second time point information, attribute information can be set in correspondence to the content information with a higher level of reliability.

The timing relationship may be a chronological relationship between the time point indicated in the first time point information and the time point indicated in the second time point information. For instance, the set of content information may be designated as a correlation target to be correlated to the specific attribute information only if the time point indicated in the first time point information matches or is more recent than the time point indicated in the second time point information. In this case, if the contents carried in the specific content information are not likely to be related to contents having originated at time points prior to the time point indicated in the second time point information and the contents carried in the set of content information originated at a time point prior to the time point indicated in the second time point information, the set of content information is not correlated to the specific attribute information set in correlation to the specific content information.

The timing relationship may be the time interval between the time point indicated in the first time point information and the time point indicated in the second time point information. For instance, the set of content information may be designated as a correlation target to be correlated to the specific attribute information only if the time interval between the time point indicated in the first time point information and the time point indicated in the second time point information is equal to or less than a preset time length. If there is only a small time lag between the time point at which the contents carried in the set of content information originated and the time point at which the contents carried in the specific content information originated, the likelihood of the contents carried in the set of content information and the contents carried in the specific content information being related to each other can be assumed to be high. Thus, by taking into consideration the time interval between the time point indicated in the first time point information and the time point indicated in the second time point information, specific attribute information assuring a high level of reliability can be set in correlation to the set of content information.

The timing information may be the relationship between a time point distribution of time points indicated in sets of second time point information included in a plurality of sets of content information to which the specific attribute information has been manually set in correlation and the time point indicated in the first time point information. For instance, the set of content information may be designated as a correlation target to be set in correlation to the specific attribute information if the time point indicated in the first time point information assumes a high frequency position in the time point distribution of the time points indicated by the set of the second time point information. When the time point indicated in the first time point information assumes a high frequency position in the time point distribution of the time points indicated in the second time point information, the likelihood of the set of content information being related to the specific attribute information can be assumed to be high. Accordingly, by taking into consideration the relationship between the time point distribution of the time points indicated in the second time point information and the time point indicated in the first time point information, specific attribute information assuring a high level of reliability can be set in correlation to the set of content information.

Each set of content information may be classified into one of a plurality of categories in correspondence to an attribute of the specific contents thereof and the attribute information aggregation may be generated for each category of content information to which the extracted attribute information is set in correlation. The information processing method adopted in conjunction with the content information and the attribute information aggregation structured as described above may further comprise a selection step in which an attribute information aggregation corresponding to a specific category is selected to be used in the first decision-making step. In this case, the number of sets of attribute information that need to be checked to determine whether or not they are contained in the set of content information in the first decision-making step can be minimized. In addition, with the category of attribute information aggregation to be used in the first decision-making step selected with care, the likelihood of unnecessary attribute information being set in correlation to the set of content information is minimized.

The information processing method may further comprise a step in which a specific content information category is selected. In this case, a decision may be made in the first decision-making step as to whether or not each set of content information grouped into the selected category contains any of the attribute information constituting the attribute information aggregation. By adopting these measures, it is ensured that attribute information is not inadvertently set in correlation to content information that is to be excluded from the image processing.

The image processing method may further comprise a step in which the attribute information aggregation is updated when new attribute information is added into the storage medium. Through the updating step, the attribute information aggregation can be updated so as to reflect any changes in the content information and the attribute information stored in the storage medium.

The first decision-making step or the correlating step may be executed with a predetermined frequency. The processing load of the first decision-making step, executed by comparing the content information stored in the storage medium with the attribute information constituting the attribute information aggregation, is high. Accordingly, by adjusting the frequency with which the first decision-making step or the correlating step is executed, the load on the hardware engaged in the execution of the image processing through the method described above can be adjusted.

The image processing method may further comprise a step in which identification information is added to the specific attribute information having been set in correlation to the set of content information through the correlating step. It can be ascertained whether the attribute information set in correlation to the content information has been manually set or has been set through the information processing method described above by referencing this identification information.

Extraction of attribute information set manually in correlation to the content information, to be incorporated in the attribute information aggregation may be disallowed. By disallowing extraction of manually set attribute information, incorporation of attribute information containing, for instance, personal contents into the attribute information aggregation is prevented.

According to another embodiment of the present invention, there is provided an information processing device comprising a storage unit that stores content information carrying specific contents and attribute information indicating an attribute of the specific contents in correlation to each other, a generation unit that generates an attribute information aggregation containing at least part of attribute information stored in the storage unit, a decision-making unit that makes a decision as to whether or not a set of content information contains any of the attribute information constituting the attribute information aggregation and a processing unit that sets the set of content information and specific attribute information in the attribute information aggregation judged to be contained in the set of content information in correlation to each other.

According to another embodiment of the present invention, there is provided a program enabling a computer to function as an information processing device comprising a storage unit that stores content information carrying specific contents and attribute information indicating an attribute of the specific contents in correlation to each other, a generation unit that generates an attribute information aggregation containing at least part of attribute information stored in the storage unit, a decision-making unit that makes a decision as to whether or not a set of content information contains any of the attribute information constituting the attribute information aggregation and a processing unit that sets the set of content information and specific attribute information in the attribute information aggregation judged to be contained in the set of content information in correlation to each other.

According to the embodiments of the present invention described above, an attribute information aggregation containing optimal attribute information, which is generated through a simple process, can be used when correlating content information and attribute information to each other.

### Brief Description of the Drawings

FIG. 1 illustrates an example of a configuration that may be assumed in a chronological table management system achieved in an embodiment;
FIG. 2 is a block diagram of the hardware configuration adopted in the chronological table management apparatus in the embodiment;
FIG. 3 is a functional block diagram presenting a structural example that may be adopted in the chronological table management apparatus in the embodiment;
FIG. 4 presents an example of a display screen that may be brought up at the display device to provide a display of chronological tables stored in the storage unit;
FIG. 5 shows examples of tag aggregations that may be generated by the tag aggregation generation unit;
FIG. 6 presents a flowchart of the tag aggregation update processing executed by the tag aggregation generation unit;
FIG. 7 is a functional block diagram showing in detail the structure adopted in the tagging unit;
FIG. 8 presents an example of time point information distribution;
FIG. 9 presents a flowchart of the information processing executed by the tagging processing unit in the embodiment; and
FIG. 10 presents an example of processing results that may be achieved by the chronological table management apparatus by adopting the information processing method.

### Detailed Description of the Preferred Embodiment

Hereafter, a preferred embodiment of the present invention will be described in detail with reference to the appended drawings. Note that, in this specification and the appended drawings, structural elements that have substantially the same functions and structures are denoted with the same reference numerals and repeated explanation of these structural elements is omitted.

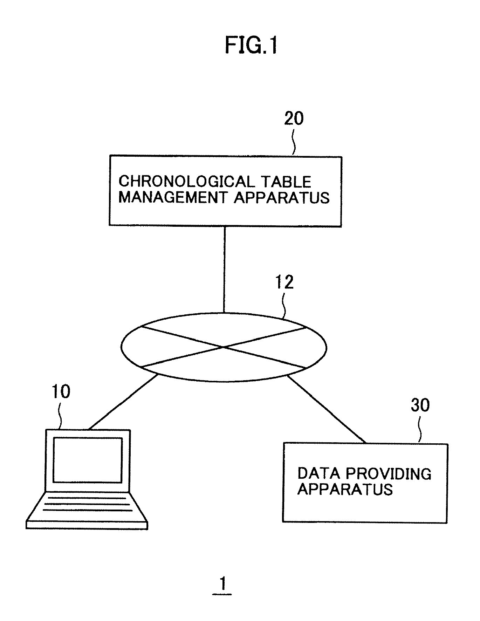

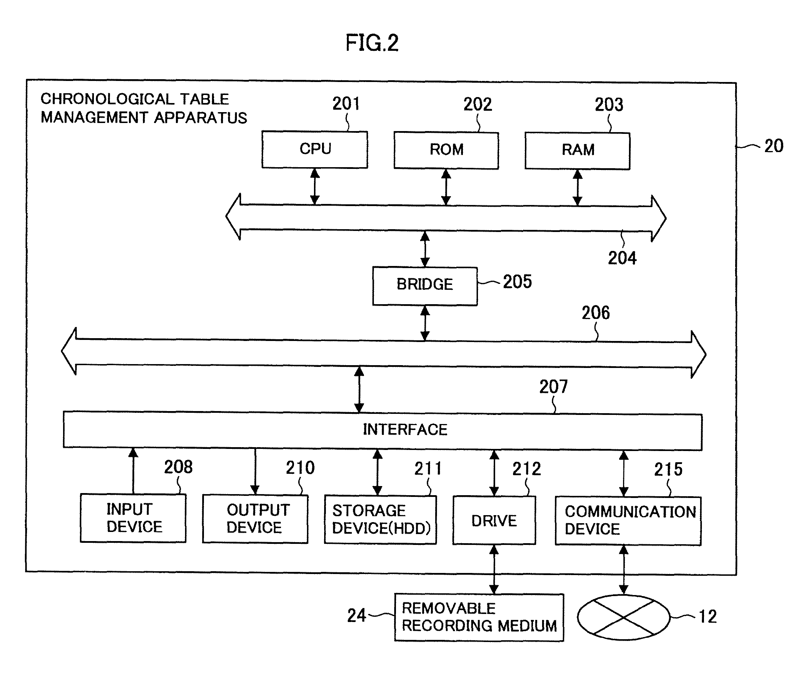

In the following description, a chronological table management system 1 achieved in the embodiment is briefly explained in reference to FIG. 1 and then the structure and the operations of a chronological table management apparatus 20 embodying the information processing device according to the present invention are explained in reference to FIGS. 2 through 10.

FIG. 1 illustrates an example of a configuration that may be adopted in the chronological table management system 1 in the embodiment. The chronological table management system 1 includes a PC (personal computer) 10, a network 12, the chronological table management apparatus 20 and a data providing apparatus 30. Through the chronological table management system 1, a chronological table is created to be stored in the chronological table management apparatus 20, and the chronological table stored in the chronological table management apparatus 20 can then be updated or utilized.

A chronological table compiled by organizing content information carrying specific contents based upon the time points at which the contents originated is stored in the chronological table management apparatus 20. For instance, a given set of content information may be stored at the chronological table management apparatus 20 in correspondence to a position on a time axis corresponding to the date on which the contents originated. In addition, the specific contents may be, for instance, music, a movie, a financial report, current news, sports news, show business news, celebrity gossip, personal history, lectures, game content or an entry. Content information may be information related to the upcoming album by a specific artist, information related to a manga publication, information related to a soccer game, information related to a memorable event for the user such as the entrance to high school, information related to a historical event or information related to a new movie release. The chronological table may be a music chronological table with sets of music-related content information organized in time sequence, a movie chronological table with sets of movie-related content information organized in time sequence, a financial news chronological table with sets of finance-related content information organized in time sequence or a personal chronological table with sets of content information related to a specific person organized in time sequence.

Content information stored in this chronological table management apparatus 20 may be provided from an external device such as the PC 10 or the data providing apparatus 30 via the network 12. The PC 10 may belong to a regular user and, in such a case, the user is able to transmit content information related to the personal background or hobbies to the chronological table management apparatus 20 via the PC 10. A business operator who owns the data providing apparatus 30 is able to transmit content information related to music, movies and the like, the rights to which he holds, to the chronological table management apparatus 20 via the data providing apparatus 30.

In addition, in response to a chronological table transmission request issued by the PC 10, the chronological table management apparatus 20 transmits a chronological table stored therein to the PC 10. The user of the PC 10 is able to check the chronological table transmitted from the chronological table management apparatus 20 by displaying it at a display device. It is to be noted that the PC 10 simply represents an example of the information processing device and the information processing device according to the present invention may be any of various other devices including a home video image processing device (a DVD recorder, a video deck, etc.) a portable telephone, a PHS (personal handyphone system) unit, a portable music reproducing device, a portable video image processing device, a PDA (personal digital assistant) unit, a home game console, a portable game machine and a home appliance. In addition, the chronological table management apparatus 20 and the data providing apparatus 30, too, may each be constituted with a similar information processing device.

The user will be able to search for desired content information among the content information included in the chronological table with ease based upon attribute information indicating attributes of contents carried in the content information and appended to the contents information as tags. Such tags may be appended to the content information through a method whereby a viewer views/listens to a given set of content information and appends a tag judged to be appropriate for the contents of the particular content information by the viewer to the content information. While this method is advantageous in that an accurate tag is appended to the content information, it is laborious to view/listen to all the content information stored in the chronological table management apparatus 20 and summarize the contents.

The chronological table management apparatus 20 in the embodiment of the present invention has been created by focusing on the issue discussed above. In the chronological table management apparatus 20 in the embodiment, a tag aggregation containing optimal tags can be generated through a simple and easy process and content information and tags can be automatically set in correlation to each other by using the tag aggregation. The structure and the operations of this chronological table management apparatus 20 are now explained in reference to FIGS. 2 through 10.

FIG. 2 is a block diagram showing the hardware configuration of the chronological table management apparatus 20 achieved in the embodiment. The chronological table management apparatus 20 comprises a CPU (central processing unit) 201, a ROM (read only memory) 202, a RAM (random access memory) 203, a host bus 204, a bridge 205, an external bus 206, an interface 207, an input device 208, an output device 210, a storage device (HDD) 211, a drive 212 and a communication device 215.

The CPU 201, which functions as an arithmetic processing device and a control device, controls the overall operations executed in the chronological table management apparatus 20 in conformance to various programs. The CPU 201 may be constituted with a microprocessor. In the ROM 202, the programs, arithmetic operation parameters and the like used by the CPU 202 are stored. In the RAM 203, a program used by the CPU 201 as it executes specific processing, parameters that change during the processing execution and the like are temporarily stored. These components are connected with one another via the host bus 204 constituted with, for instance, a CPU bus.

The host bus 204 is connected to the external bus 206, e.g., a PCI (peripheral component interconnect/interface) bus, via the bridge 205. It is to be noted that the host bus 204, the bridge 205 and the external bus 206 do not need to be provided as separate units independent of one another and that their individual functions may be fulfilled at a single bus.

The input device 208 may include, for instance, an operation means to be operated by the user, such as a mouse, a keyboard, a touch panel, a button, a switch or a lever, an input control circuit that generates an input signal based upon an operation performed by the user and outputs the input signal thus generated to the CPU 201, and the like. The user of the chronological table management apparatus 20 is able to enter various types of data to the chronological table management apparatus 20 and issue processing operation instructions for the chronological table management apparatus 20 by operating the input device 208.

The output device 210 includes a display device such as a CRT (cathode ray tube) display device, a liquid crystal display (LCD) device or a lamp, and an audio output device such as a speaker or a headphone. Reproduced contents, for instance, are output via the output device 210. More specifically, various types of information such as reproduced video image data are displayed in a text format or as images at the display device. The audio output device provides reproduced audio data or the like converted to an audio output.

The storage device 211 is a data storage device constituting an example of the storage unit in the chronological table management apparatus 20 in the embodiment. This storage device 211 may include, for instance, a storage medium, a recording device that records data into the storage medium, a read device that reads data from the storage medium and a deletion device that deletes data recorded in a storage medium. The storage device 211 may be, for instance, an HDD (hard disk drive). As a hard disk is driven, programs to be executed by the CPU 201 and various types of data to be used by the CPU 202 are stored into the storage device 211. In addition, a chronological table containing a plurality of sets of content information and a tag aggregation to be detailed later are stored in the storage device 211.

The drive 212, which functions as a storage medium reader/writer, is provided as a built-in unit in the chronological table management apparatus 20 or as an externally mounted unit. The drive 212 read out information recorded in a magnetic disk, an optical disk, a magneto-optical disk or a removable storage medium 24 such as a semiconductor memory loaded therein and outputs the information thus read out to the RAM 203.

The communication device 215 is a communication interface constituted with, for instance, a communication device that can be connected to the network 12. The communication device 215 may be a wireless LAN (local area network) compliant communication device, a wireless USB compliant communication device or a wired communication device which engages in wired communication. The communication device 215 exchanges various types of data including chronological tables and content information with the PC 10, the data providing apparatus 30 and the like.

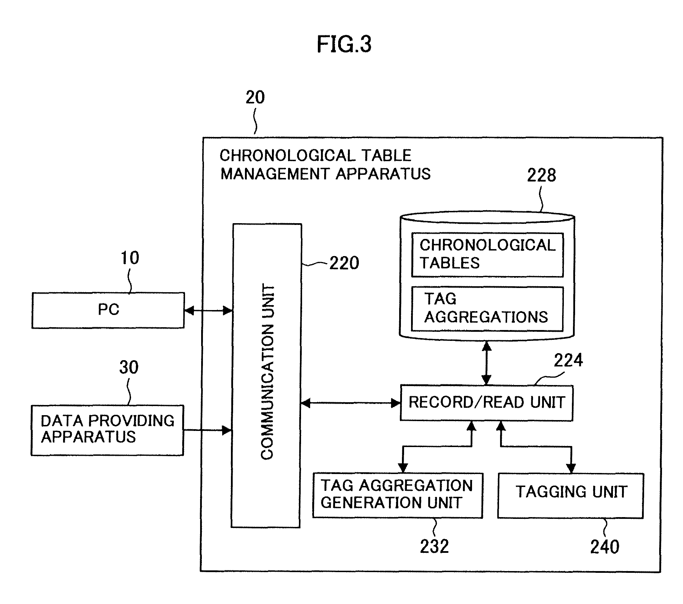

Since hardware structures substantially identical to the hardware structure of the chronological table management apparatus 200 achieved in the embodiment having been described in reference to FIG. 2 above can be adopted in the PC 10 and the data providing apparatus 30, a repeated explanation is omitted. Now, the functions of the chronological table management apparatus 200 achieved in the embodiment are explained in reference to FIG. 3.

FIG. 3 is a functional block diagram presenting a structural example that may be adopted in the chronological table management apparatus 20 in the embodiment. The chronological table management apparatus 20 includes a communication unit 220, a record/read unit 224, a storage unit 228, a tag aggregation generation unit 232 and a tagging unit 240.

The communication unit 220 is an interface with the PC 10 and the data providing apparatus 30 and functions as a reception unit and a transmission unit. In more specific terms, content information transmitted from the PC 10 and content information transmitted from the data providing apparatus 30 are received at the communication unit 220. In addition, the communication unit 220 transmits a chronological table stored in the storage unit 228 to the PC 10. It is to be noted that the communication unit 220 may be achieved as a software program that enables the communication device 215 in FIG. 2 to fulfill specific functions.

The record/read unit 224, which functions both as a record unit, a read unit and records content information and tags into the storage unit 228 and reads out a chronological table and a tag aggregation from the storage unit 228. The record/read unit 224 is capable of, for instance, recording content information, having been received from the PC 10 or the data providing apparatus 30 via the communication unit 220, at a specific position on a chronological table stored in the storage unit 228.

In the storage unit 228, a chronological table, compiled by organizing content information carrying specific contents based upon the time points at which the contents originated and a tag aggregation generated by the tag aggregation generation unit 232 are stored. Such a storage unit 228 may be a nonvolatile memory such as an EEPROM (electrically erasable programmable read-only memory), EPROM (erasable programmable read-only memory), a magnetic disk such as a hard disk or a disk-shaped magnetic disk or a storage medium constituted with an optical disk such as a CD-R(compact disk recordable)/RW (rewritable), a DVD-R (digital versatile disk recordable)/RW/+R/+RW/RAM (random access memory) or a BD (blue-ray disk)® -R/BD-RE or constituted with an MO (magneto-optical) disk.

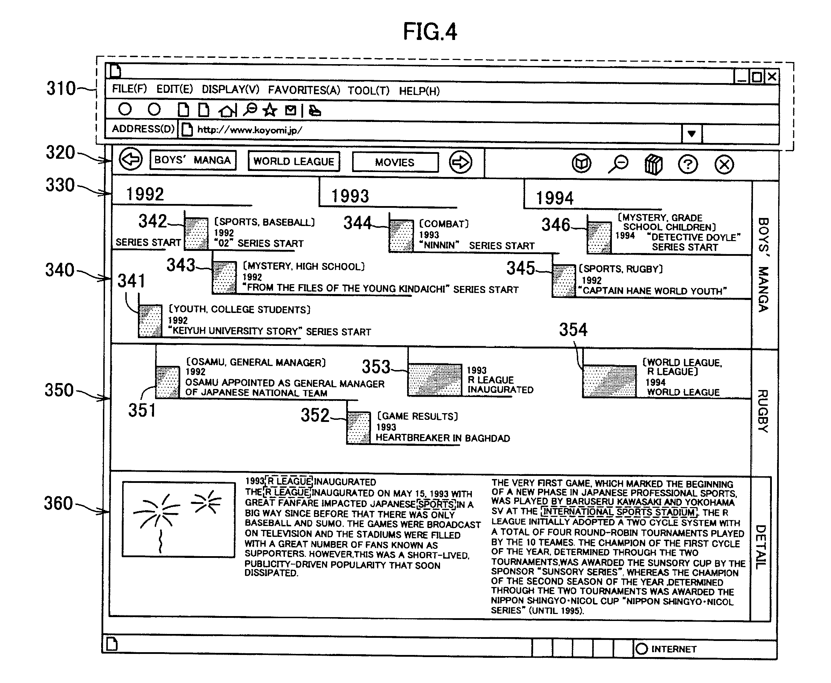

FIG. 4 presents an example of a display screen that may be brought up on display at a display device to provide a display of chronological tables stored in the storage unit 228. Chronological tables may be displayed in a display screen such as that shown in FIG. 4 at, for instance, the display device of the PC 10.

The chronological table display screen in FIG. 4 includes a basic operation area 310, a chronological table selection area 320, a period indication area 330, a boys' manga chronological table 340, a rugby chronological table 350 and a details display area 360.

In the basic operation area 310, icons, character strings, buttons and the like, via which basic operations, e.g., enlarging or reducing the display screen, saving the display screen and updating the display screen are performed, are displayed. For instance, the user may click on the character string "display" with the mouse so as to bring up on display a screen via which the display screen can be enlarged or reduced.

In the chronological table selection area 320, icons, character strings, buttons and the like via which a specific chronological table is selected for display are displayed. In the chronological table selection area 320 shown in FIG. 4, a "boys' manga" chronological table, a "World League" chronological table or a "movies" chronological table can be selected. For instance, the user may click "movies" with the mouse so as to bring up the movie chronological table on display.

The period display area 330 is used as the time axis in a chronological table. For instance, content information related to the year 1992 is set at a position corresponding to "1992".

The boys' manga chronological table 340 is compiled by organizing content information related to manga for young male readership in time sequence. The boys' manga chronological table 340 contains content information 341 through content information 346 and the like. Each set of content information may include a title, time point information, an icon, details information, an URL (uniform resource locator) of related information and the type of medium in which the content information is provided, e.g., still image, dynamic image or music.

In more specific terms, the content information 341 contains a title ""Keiyuh University Story" series start" and time point information indicating "1992". As the user selects this content information 341, details information corresponding to the content information 341 may be brought up on display as a description of the content information. In addition, attributes "youth" and "college students" corresponding to "Keiyuh University Story" are attached as tags to the content information 341 (the tags are the character strings inside the parentheses). These tags may have been attached manually. It is to be noted that the time units assumed for time points indicated in time point information are not limited to years, and generations, centuries, months, weeks, days, hours or minutes may be assumed as the time units instead.

Likewise, the content information 342 includes a title ""O2" series start", and time point information "1992" with tags "sports" and "baseball" attached thereto, the content information 343 includes the title ""From the files of the young Kindaichi" series start", and time point information "1992", with tags "mystery" and "high school "attached thereto, the content information 344 includes a title ""NINNIN" series start", and time point information "1993" with a tag "combat" attached thereto, the content information 345 includes the title ""Captain Hane World Youth" series start", and time point information "1994" with tags "sports" and "rugby" attached thereto and the content information 346 includes a title ""Detective Doyle" series start", and time point information " 1994", with tags "mystery" and "grade school children" attached thereto.

The rugby chronological table 350 is a chronological table compiled by organizing rugby-related content information in time sequence. The rugby chronological table 350 contains content information 351 through content information 354.

More specifically, the content information 351 contains a title "Osamu new general manager of Japanese national team" and time point information "1992", with tags "Osamu" and "general manager" attached thereto, the content information 352 contains a title "Heartbreaker in Baghdad" and time point information "1993", with tags "game results" attached thereto and the content information 354 contains a title "World League" and time point information "1994", with tags " World League" and "R League" attached thereto.

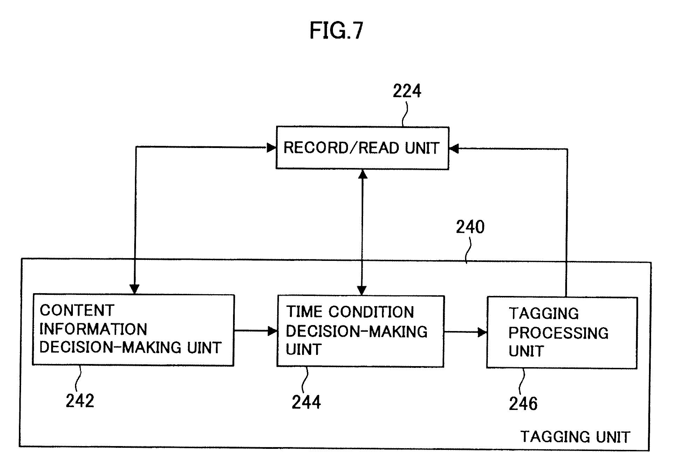

While the content information 353 includes a title "R League inaugurated" and time point information "1993", no tag is attached to the content information 353. The feature of the chronological table management apparatus 20 that characterizes the embodiment is that a tag can be attached to content information that has not yet been tagged or an additional tag can be added to content information with ease. This feature is to be described in detail later in reference to FIGS. 7 through 10.

The contents of content information are described in detail in the details display area 360. FIG. 4 shows the details information corresponding to the content information 353 "R League inaugurated". The details information corresponding to the content information 353 "R League inaugurated" includes, for instance, a description "The R League inaugurated on May 15, 1993 with great fanfare impacted Japanese sports in a big way since before that there was only baseball and Sumo" and a description "The very first game, which marked the beginning of a new phase in Japanese professional sports, was played by Baruseru Kawasaki and Yokohama SV at the International Sports Stadium".

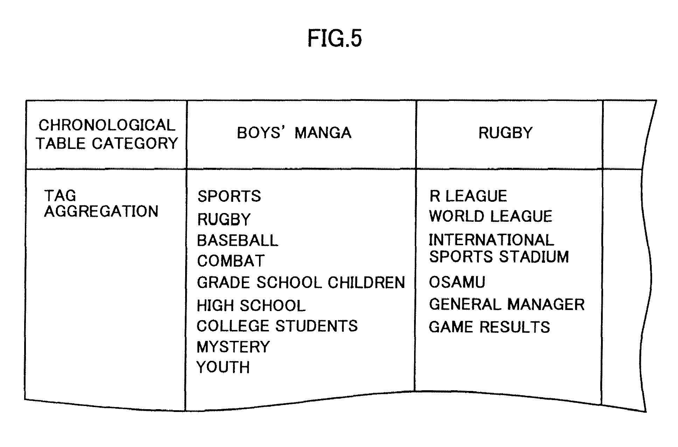

To resume the explanation of the structure adopted in the chronological table management apparatus 20 in reference to FIG. 3, the tag aggregation generation unit 232 generates a tag aggregation by extracting tags attached to the content information constituting a chronological table stored in the storage unit 228. For instance, the tag aggregation generation unit 232 may generate tag aggregations such as those shown in FIG. 5 based upon the boys' manga chronological table 340 and the rugby chronological table 350 shown in FIG. 4.

FIG. 5 presents examples of tag aggregations that may be generated by the tag aggregation generation unit 232. The tag aggregations in FIG. 5 are generated each in correspondence to a specific chronological table used as a tag extraction source. More specifically, the tag aggregation corresponding to the boys' manga chronological table 340 includes the tag "sports" attached to the content information 342 in the boys' manga chronological table 340 and the tag "rugby" attached to the content information 345 in the boys' manga chronological table 340. The tag aggregation corresponding to the boys' manga chronological table 340 further includes tags "baseball", "combat", "grade school children", "high school", "college students", "mystery", "youth" and the like.

In addition, the tag aggregation corresponding to the rugby chronological table 350 includes the tags "World League" and "R League" attached to the content information 354 in the rugby chronological table 350, a tag "International Sports Stadium" attached to content information not shown in FIG. 4. The tag aggregation corresponding to the rugby chronological table 350 further includes tags "Osamu", "general manager", "game results" and the like.

It is to be noted that while the tag aggregations in FIG. 5 are generated each in correspondence to a specific chronological table used as a tag extraction source, a tag aggregation does not need to be generated in correspondence to a single tag extraction source, i.e., a single chronological table.

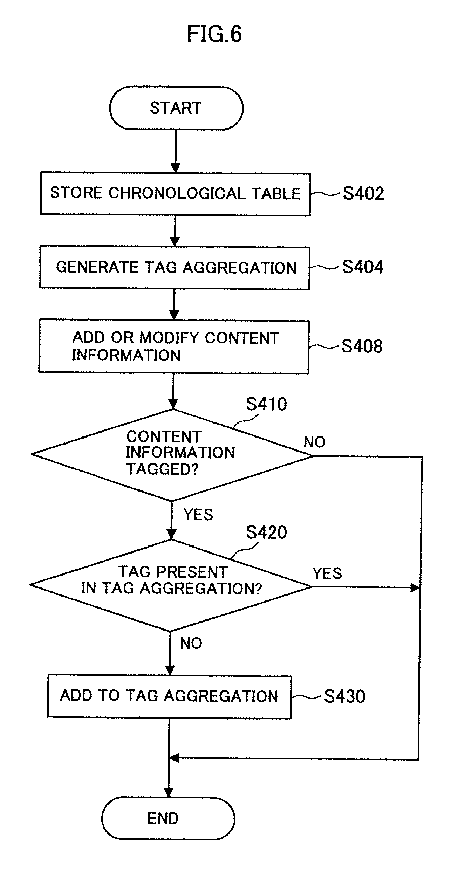

In addition, the tag aggregation generation unit 232 is capable of updating a tag aggregation that has already been generated. The flow of the tag aggregation update processing executed by the tag aggregation generation unit 232 is explained in reference to FIG. 6.

FIG. 6 presents a flowchart of the tag aggregation update processing executed by the tag aggregation generation unit 232. First, in a storage step, the record/read unit 224 records in the storage unit 228 content information in correspondence to tags and a chronological table is generated (S402). Next, in a generation step, the tag aggregation generation unit 232 generates a tag aggregation based upon the chronological table having been generated (S404). Then, as the record/read unit 224 adds new content information into the storage unit 228 or modifies content information in the storage unit 228 (S408), the tag aggregation generation unit 232 makes a decision as to whether or not a tag is attached to the content information that has been added or modified (S410). Upon deciding that a tag is attached to the content information that has been added or modified, the tag aggregation generation unit 232 makes a decision as to whether or not the tag is present in the tag aggregation (S420).

If it is decided that the tag is not in the tag aggregation, the tag aggregation generation unit 232 executes an update step to add the tag to the tag aggregation via the record/read unit 224 (S430). If, on the other hand, it is decided in step S410 that no tag is attached to the content information that has been added or modified, or if it is decided in step S420 that the tag is already included in the tag aggregation, the tag aggregation generation unit 232 ends the operation.

As described above, when a new tag is added into the storage unit 228, the tag aggregation generation unit 232 adds the new tag into the tag aggregation, thereby updating the tag aggregation so as to reflect the changes in the content information and the tags stored in the storage unit 228.

To resume the description of the structure adopted in the chronological table management apparatus 20 in reference to FIG. 3, the tagging unit 240 is capable of attaching a tag to each set of content information constituting a chronological table stored in the storage unit 228 by comparing the particular content information with a tag aggregation. The structure and the operation of the tagging unit 240 are now described in detail in reference to FIG. 7 through 9.

FIG. 7 is a functional block diagram showing the structure of the tagging unit 240 in detail. The tagging unit 240 includes a content information decision-making unit 242, a time condition decision-making unit 244 and a tagging processing unit 246.

The content information decision-making unit 242 ascertains tags in the individual sets of content information constituting the chronological tables stored in the storage unit 228, which are present in the tag aggregation. For instance, if the target content information is provided in a text format, it makes a decision as to whether and not the title, the description or the like in the content information contain a character string matching or resembling a tag.

More specifically, the content information 353 in FIG. 4 includes a description "The R League inaugurated on May 15, 1993 with great fanfare impacted Japanese sports in a big way since before that there was only baseball and Sumo" and a description "The very first game, which marked the beginning of a new phase in Japanese professional sports, was played by Baruseru Kawasaki and Yokohama SV at the international sports stadium", as explained earlier. Assuming that the tag aggregations shown in FIG. 5 are stored in the storage unit 228, the content information decision-making unit 242 judges that the content information 353 contains character strings matching the tags "R League", "baseball", "sports" and "International Sports Stadium".

It is to be noted that the content information decision-making unit 242 is able to select a tag aggregation corresponding to a specific chronological table category to be compared with the content information. More specifically, the content information decision-making unit 242, making a decision with regard to the content information 353 shown in FIG. 4, is able to selectively use only the tag aggregation corresponding to the rugby chronological table. Under these circumstances, the content information decision-making unit 242 judges that the content information 353 contains character strings matching the tags "R League" and "International Sports Stadium". Namely, the content information decision-making unit 242 is able to disqualify "baseball", which does not match the fundamental content of the content information 353, and "sports", which is not a particularly effective identification keyword in the rugby chronological table, as tags to be attached to the content information 353. By allowing the content information decision-making unit 242 to select a specific tag aggregation to be used when making a decision for the target content information as described above, the likelihood of a tag with a low level of relation to the content information becoming attached to the content information is minimized.

In addition, if the content information is provided in an audio format, the content information decision-making unit 242 may make a decision as to whether or not the sound data in the content information contain a specific sound representing a tag in the tag aggregation. If the content information is provided in a video image format, the content information decision-making unit 242 may make a decision as to whether or not the video image data in the content information contain a video image representing a tag in the tag aggregation. Likewise, if the content information is provided in an image format, the content information decision-making unit 242 may make a decision as to whether or not the image data in the content information contain an image representing a tag in the tag aggregation.

The time condition decision-making unit 244 makes a decision based upon a timing relationship between time point information (hereafter may be referred to as first time point information) included in a set of content information, which is the current decision-making target of the content information decision-making unit 242, and time point information (hereafter may be referred to as second time point information) included in specific content information from which a specific tag judged by the content information decision-making unit 242 to be contained in the set of content information was initially extracted, as to whether or not the specific tag should be designated as a correlation target to be set in correlation to the set of content information. It is to be noted that the specific tag may have been manually attached to the specific content information.

For instance, the time condition decision-making unit 244 may designate the set of content information as a correlation target to be correlated to the specific attribute information only if the time point indicated in the first time point information matches or is more recent than the time point indicated in the second time point information. In this case, if the contents carried in the specific content information are not likely to be related to contents having originated at time points prior to the time point indicated in the second time point information and the contents carried in the set of content information originated at a time point prior to the time point indicated in the second time point information, the set of content information is not correlated to the specific tag set in correlation to the specific content information.

For instance, if the tag "Osamu" in the tag aggregation has been extracted from content information with time point information indicating the year "1992", the tag "Osamu" can be disqualified as a correlation target to be set in correlation to content information with time point information indicating time points preceding 1992. The likelihood of a character string "Osamu" contained in content information originating prior to 1992 referring to a person other than "Osamu", who was appointed to general manager of the Japanese national team in 1992, is significant and, accordingly, by imposing the restrictions with regard to the time condition via the time condition decision-making unit 244, unreliable tagging of content information can be effectively prevented.

Alternatively, the time condition decision-making unit 244 may designate the set of content information as a correlation target to be set in correlation to the specific tag only if the time interval between the time point indicated in the first time point information and the time point indicated in the second time point information is equal to or less than a preset time length. If there is only a small time lag between the time point at which the contents carried in the set of content information originated and the time point at which the contents carried in the specific content information originated, the likelihood of the contents carried in the set of content information and the contents carried in the specific content information being related to each other can be assumed to be high. Thus, by taking into consideration the time interval between the time point indicated in the first time point information and the time point indicated in the second time point information, the specific tag assuring a high level of reliability can be set in correlation to the set of content information.

For instance, if the tag "Osamu" in the tag aggregation has been extracted from content information with time point information indicating the year "1992", the tag "Osamu" may be disqualified as a correlation target to be set in correlation to content information with time point information indicating time points with time intervals of five years or more relative to 1992. Assuming that "Osamu" was appointed to the position of general manager of the Japanese national team in 1992, the likelihood of Osamu no longer being general manager of the Japanese national team by 1997 is high. Accordingly, a character string "Osamu" included in content information with time point information indicating the time point 1997 or later is highly likely to refer to another person and, by imposing the time restrictions related to the time condition via the time condition decision-making unit 244 as described above, tagging of content information with relatively unreliable tags can be prevented effectively.

As a further alternative, the time condition decision-making unit 244 may designate the set of content information as a correlation target to be set in correlation to the specific tag if the time point indicated in the first time point information assumes a high frequency position in the time point distribution of the time points indicated in sets of second time point information included in a plurality of sets of content information to which the specific tag has been appended. When the time point indicated in the first time point information assumes a high frequency position in the time point distribution of the time points indicated in the second time point information, the likelihood of the set of content information being related to the specific tag can be assumed to be high. Accordingly, by taking into consideration the relationship between the distribution of the time points indicated in the second time point information and the time point indicated in the first time point information, a specific tag assuring a high level of reliability can be set in correlation to the set of content information.

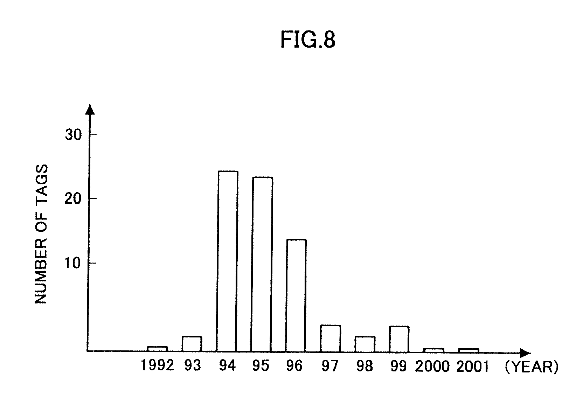

For instance, sets of time point information included in content information tagged with "World League" may be distributed as shown in FIG. 8. FIG. 8 indicates that the time point information in the content information tagged with "World League" mainly indicate years 1994, 1995 and 1996. Accordingly, the time condition decision-making unit 224 may select content information containing the character string "World League", with the time point information thereof indicating the year 1994, 1995 or 1996 as content information to be tagged with "World League". At the same time, the time condition decision-making unit 244 is able to determine that any content information containing the character string "World League" with time point information thereof indicating a year other than 1994, 1995 or 1996 is not to be tagged with "World League".

The tagging processing unit 246 then sets (appends) a specific tag in correlation to content information having been designated by the time condition decision-making unit 244 as a correlation target to be set in correlation to the specific target. Now, the operation of the tagging unit 240 described above is explained in reference to the flowchart.

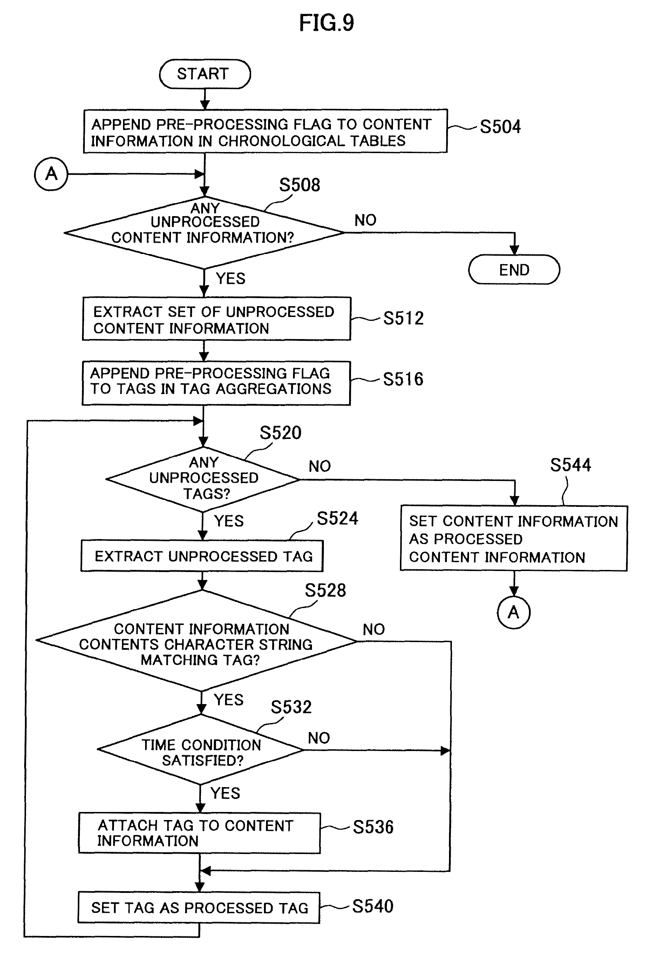

FIG. 9 presents a flowchart of the image processing executed by the tagging processing unit 246 in the embodiment. The content information decision-making unit 242 first appends a pre-processing flag to content information in a chronological table stored in the storage unit 228 (S504). Then, the content information decision-making unit 242 makes a decision as to whether or not there is any set of content information marked with the preprocessing flag (S508). The content information decision-making unit 242 then extracts a set of content information having been judged to be marked with the preprocessing flag (S512).

Next, the content information decision-making unit 242 appends a preprocessing flag to tags constituting the tag aggregation stored in the storage unit 228 (S516). Then, the content information decision-making unit 242 makes a decision as to whether or not there is any tag marked with the preprocessing flag (S520). The content information decision-making unit 242 then extracts a tag having been judged to be marked with the preprocessing flag (S524).

Subsequently, the content information decision-making unit 242 executes a first decision-making step in which a decision is made as to whether or not the content information having been extracted in step S512 contains a character string matching the tag having been extracted in step S524 (S528). If it is decided that the content information having been extracted in S512 contains the character string matching the tag having been extracted in S524, the time condition decision-making unit 244 executes a second decision-making step in which a decision is made as to whether or not the time point indicated in the time point information in the content information having been extracted in S512 and the time point indicated in the time point information corresponding to the tag having been extracted in S524 satisfies a predetermined time condition (S532).

Then, if it is decided that the time point indicated in the time point information in the content information having been extracted in step S512 and the time point indicated in the time point information corresponding to the tag having been extracted in step S524 satisfies the predetermined time condition, the tagging processing unit 246 executes a correlating step in which the tag having been extracted in S524 is appended to the time point information in the content information having been extracted in S512 (S536). At this point, the tagging processing unit 246 is able to attach identification information indicating that the tag has been appended by adopting the information processing method described above as well. Subsequently, the content information decision-making unit 242 sets a postprocessing flag for the tag having been extracted in S524 (S540), before the operation returns to S520.

If on the other hand, it is decided in step S528 that the content information having been extracted in S512 does not contain a character string matching the tag having been extracted in S524 or it is decided in step S532 that the time point indicated in the time point information in the content information having been extracted in S512 and the time point indicated by the time point corresponding to the tag having been extracted in S524 do not satisfy the specific time condition, the operation proceeds to step S540.

In addition, if it is decided in step S520 that there is no tag marked with the preprocessing flag, the content information decision-making unit 242 sets a postprocessing flag for the content information having been extracted in S512 (S544) and then the operation returns to S508.

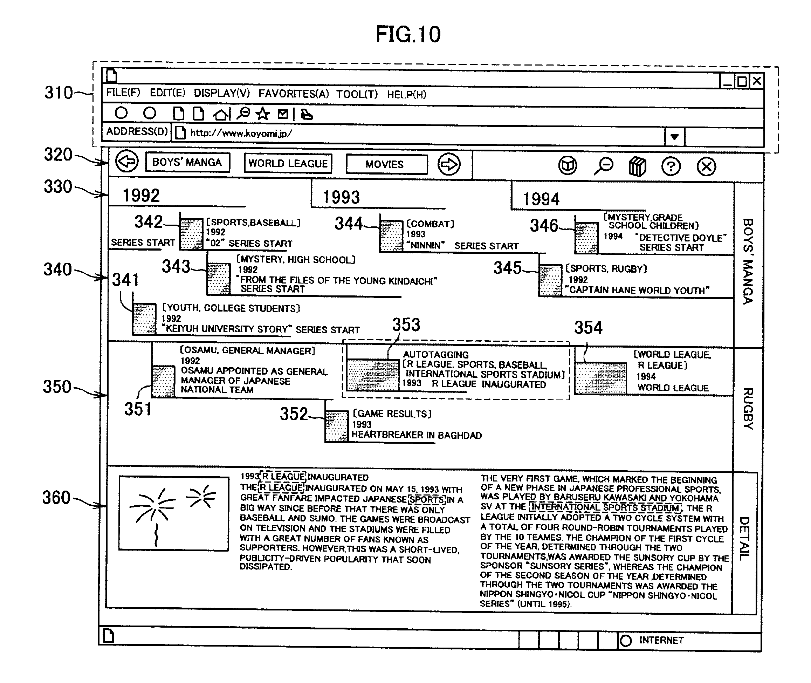

FIG. 10 presents an example of results of the image processing executed by the chronological table management apparatus 20 as described above in conjunction with chronological tables such as those shown in FIG. 4 stored in the storage unit 228.

FIG. 10 presents an example of results that may be achieved by the chronological table management apparatus 20 by executing the image processing as described above. The untagged content information 353 in FIG. 4 has been automatically tagged with "R League", "baseball", "sports" and "International Sports Stadium" through the image processing method achieved in the embodiment. In addition, information "autotagging" is appended to these tags as identification information indicating that they have been appended through the information processing method achieved in the embodiment. It is to be noted that the identification information does not need to assume a character string format and may be provided as information distinguishable by, for example, its color or font.

As described above, the chronological table management apparatus 20 achieved in the embodiment, which automatically generates tag aggregations based upon tags manually attached to content information, makes it possible to set content information in correlation to correct tags with ease while minimizing the likelihood of undesirable tag information that does not correctly indicate an attribute or contents of content information becoming included in an attribute information aggregation.

In addition, the chronological table management apparatus 20 in the embodiment, which includes the time condition decision-making unit 244 that makes a decision as to whether or not to set a given set of content information in correlation to a specific tag based upon the timing relationship between the time point indicated in the time point information in the set of content information and the time point indicated in the time point information in the content information used as the tag extraction source, is able to append a tag to the set of content information in an even more reliable manner.

It will be understood by those skilled in the art that various modifications, combinations, sub-combinations and alterations may be made depending upon design requirements and other factors insofar as they are within the scope of the appended claims or equivalents thereof.

The correlation processing executed by the tagging unit 240 to set content information in correlation to specific tags in the chronological table management apparatus 20 may be executed with a predetermined frequency, over a specific cycle such every 24 hours or every 12 hours, or it may be executed over irregular intervals, e.g., twice a day or three times a month in the chronological table management apparatus 20. By adjusting the frequency as necessary, the load on the chronological table management apparatus 20 can be optimized.

In addition, the tagging target content information for which the content information decision-making unit 242 in the chronological table management apparatus 20 makes decisions may be selected in correspondence to a specific chronological table category. By adopting these measures, it is ensured that a tag is not inadvertently set in correlation to content information that should be disqualified as an autotagging target.

Extraction of a specific tag to be incorporated in a tag aggregation, by the tag aggregation generation unit 232 may be disallowed. By disallowing extraction of a tag containing personal contents, for instance, incorporation of a tag containing personal contents into the tag aggregation is prevented.

While an explanation is given above on an example in which content information is appended with tags, tags may also be appended to a chronological table containing a plurality of sets of content information.

Furthermore, a computer program that enables hardware units such as the CPU 201, the ROM 202 and the RAM 203 in the chronological table management apparatus 20 to fulfill functions equivalent to the individual functional blocks of the chronological table management apparatus 20 may be provided. In addition, the present invention provides a storage medium having such a program stored therein.

The various steps of the processing executed in the chronological table management apparatus 20 in the description do not necessarily need to be executed in time sequence matching the order described in reference to the flow charts, and they may be executed concurrently or individually (e.g., through parallel processing or object-based processing).

## Claims

1. An information processing method comprising the steps of:
a storage step in which attribute information indicating an attribute of specific contents carried in content information is stored in correlation to the content information;
a generation step in which an attribute information aggregation is generated by extracting at least part of attribute information stored through the storage step;
a first decision-making step in which a decision is made as to whether or not a set of content information stored in a storage medium contains any of attribute information constituting the attribute information aggregation; and
a correlating step in which the set of content information and specific attribute information judged to be contained in the set of content information among the attribute information constituting the attribute information aggregation are set in correlation to each other.

2. An information processing method according to claim 1, wherein:
the content information includes time point information indicating a time point at which the specific contents originated.

3. An information processing method according to claim 2, further comprising the steps of:
a second decision-making step in which a decision is made as to whether or not to designate the specific attribute information as a correlation target to be correlated to the set of content information based upon a timing relationship between the time point indicated in first time point information contained in the set of content information and the time point indicated in second time point information contained in specific content information to which the specific attribute information has been manually correlated.

4. An information processing method according to claim 3, wherein:
the timing relationship is a chronological relationship between the time point indicated in the first time point information and the time point indicated in the second time point information.

5. An information processing method according to claim 3, wherein:
the timing relationship is a time interval between the time point indicated in the first time point information and the time point indicated in the second time point information.

6. An information processing method according to claim 3, wherein:
the timing information is a relationship between a distribution of time points indicated in the second time point information included in a plurality of sets of content information to which the specific attribute information has been manually set in correlation and the time point indicated in the first time point information.

7. An information processing method according to one of the claims 1 to 6, wherein:
each set of content information is classified into one of a plurality of categories in correspondence to an attribute of the specific contents thereof;
the attribute information aggregation is generated for each category of content information to which the extracted attribute information is set in correlation; and
the information processing method further comprises:
a step in which an attribute information aggregation corresponding to a specific category is selected to be used in the first decision-making step.

8. An information processing method according to claim 7, further comprising:
a step in which a specific content information category is selected; and
in the first decision-making step, a decision is made as to whether or not each set of content information grouped into the selected category contains any of the attribute information constituting the attribute information aggregation.

9. An information processing method according to one of the claims 1 to 8, further comprising:
a step in which the attribute information aggregation is updated when new attribute information is added into the storage medium.

10. An information processing method according to one of the claims 1 to 9, wherein:
the first decision-making step or the correlating step is executed with a predetermined frequency.

11. An information processing method according to one of the claims 1 to 10, further comprising:
a step in which identification information is added to the specific attribute information having been set in correlation to the set of content information through the correlating step.

12. An information processing method according to one of the claims 1 to 11, wherein:
extraction of attribute information having been set manually in correlation to the content information, to be incorporated in the attribute information aggregation, is disallowed.

13. An information processing device comprising:
a storage unit that stores content information carrying specific contents and attribute information indicating an attribute of the specific contents in correlation to each other;
a generation unit that generates an attribute information aggregation containing at least part of attribute information stored in the storage unit;
a decision-making unit that makes a decision as to whether or not a set of content information contains any of attribute information constituting the attribute information aggregation; and
a processing unit that sets the set of content information and specific attribute information in the attribute information aggregation judged to be contained in the set of content information in correlation to each other.

14. An information processing device according to claim 13, wherein:
the content information includes time point information indicating a time point at which the specific contents originated; and
the information processing device further comprises:
a second decision-making unit that makes a decision as to whether or not to designate the specific attribute information as a correlation target to be correlated to the set of content information based upon a timing relationship between the time point indicated in first time point information contained in the set of content information and the time point indicated in second time point information contained in specific content information to which the specific attribute information has been manually correlated.

15. An information processing device according to claim 14, wherein:
the second decision-making unit makes a decision as to whether or not to designate the specific attribute information as a correlation target to be correlated to the set of content information based upon a chronological relationship between the time point indicated in the first time point information and the time point indicated in the second time point information.

16. An information processing device according to claim 14, wherein:
the second decision-making unit makes a decision as to whether or not to designate the specific attribute information as a correlation target to be correlated to the set of content information based upon a time interval between the time point indicated in the first time point information and the time point indicated in the second time point information.

17. An information processing device according to claim 14, wherein:
the second decision-making unit makes a decision as to whether or not to designate the specific attribute information as a correlation target to be correlated to the set of content information based upon a relationship between a distribution of time points indicated in the second time point information included in a plurality of content information to which the specific attribute information has been manually set in correlation and the time point indicated in the first time point information.

18. An information processing device according to one of the claims 13 to 17, wherein:
sets of content information stored in the storage unit are each classified into one of a plurality of categories in correspondence to an attribute of the specific contents thereof;
the generation unit generates the attribute information aggregation in correspondence to each category of content information to which the extracted attribute information is set in correlation; and
the decision-making unit selects an attribute information aggregation corresponding to a specific category to be used by the decision-making unit.

19. An information processing device according to one of the claims 13 to 18, wherein:
the decision-making unit makes a decision as to whether or not each set of content information grouped into the selected category contains any of the attribute information constituting the attribute information aggregation.

20. An information processing device according to one of the claims 13 to 19, wherein:
the generation unit disallows extraction of attribute information having been manually set in correlation to the content information to be integrated into the attribute information aggregation.

21. A recording medium having recorded therein a program enabling a computer to execute specific processing, wherein:
the specific processing comprises the steps of:
a storage step in which attribute information indicating an attribute of specific contents carried in content information is stored in correspondence to the content information;
a generation step in which an attribute information aggregation is generated by extracting at least part of attribute information stored through the storage step;
a first decision-making step in which a decision is made as to whether or not a set of content information stored in a storage medium contains any of attribute information constituting the attribute information aggregation; and
a correlating step in which the set of content information and specific attribute information judged to be contained in the set of content information among the attribute information constituting the attribute information aggregation are set in correlation to each other.
